# EUROPÄISCHE PATENTSCHRIFT

(11) **EP 2 223 800 B1**
(45) Veröffentlichungstag und Bekanntmachung des Hinweises auf die Patenterteilung: **03.07.2013**
(21) Anmeldenummer: 10001720.1
(22) Anmeldetag: 19.02.2010
(51) Int. Cl.: B44C 1/10, B32B 21/06, D21H 17/51, D21H 17/26, B44C 5/04, D21H 27/24, D21H 27/26

(54) **Dekorprodukt, Verfahren zum Herstellen eines Dekorprodukts und Verwendung eines Dekorprodukts zum Herstellen einer dekorierten Trägerfläche**
Decorative product, method for producing a decorative product and use of same for producing a decorated support surface
Produit décoratif, procédé de fabrication d'un produit décoratif et utilisation d'un produit décoratif pour fabriquer une surface de support décorée

(30) Priorität: 19.02.2009 DE 102009009646
(43) Veröffentlichungstag der Anmeldung: 01.09.2010
(73) Patentinhaber: SÜDDEKOR GmbH, 89150 Laichingen (DE)
(72) Erfinder: Schweizer, Guido, 89188 Merklingen (DE); Lerner, Ralf, 89278 Nersingen (DE)
(74) Vertreter: Müller-Boré & Partner Patentanwälte

(56) Entgegenhaltungen:
- EP-A2- 0 819 794
- WO-A1-02/04206
- DE-A1- 3 503 666
- DE-U1-202004 018 710
- US-A- 3 983 307
- US-A1- 2002 007 909
- US-A1- 2008 199 672

## Beschreibung

Die vorliegende Erfindung betrifft ein Dekorprodukt, ein Verfahren zum Herstellen eines Dekorprodukts und eine Verwendung eines Dekorprodukts zum Herstellen einer dekorierten Trägerfläche.

Üblicherweise werden Dekorprodukte mit Hilfe von Haftmitteln, z.B. Leim, auf Trägerplatten kaschiert. Diese Produkte werden beispielsweise mit duroplast/thermoplastischen Systemen auf Trägerplatten kaschiert, wobei Druck und Hitze angewandt werden. Die Kaschierung und damit das Verbinden von Dekorprodukt und Trägerplatte kann dabei recht zeitaufwendig sein. Bei der Herstellung hochglänzender, lackierter Holzwerkstoffplatten für Fußböden und Möbel werden harzgefüllte Grundierfilme verwendet, die nach dem Aufbringen auf die Trägerplatte und vor der Lackierung geschliffen werden müssen. Durch den notwendigen Schleifvorgang können keine vorgedruckten Grundierfilme eingesetzt werden.

Die Druckschrift EP 0 819 794 A2 offenbart ein Verfahren zum Herstellen eines Dekorpapiers, wobei ein Auflagepapier mit einem Kunstharz imprägniert wird und anschließend auf einem nicht mit Kunstharz imprägnierten Dekorpapier gelegt wird, um beide Papierschichten unter Druck und hoher Temperatur miteinander zu verbinden bzw. zu laminieren.

Die Druckschrift US 2008/0199672 A1 offenbart ein Dekorprodukt, welches eine bedruckte sichtbare Papierschicht umfaßt, die vollständig mit Kunstharz getränkt ist, wobei zusätzlich eine Schicht von zumindest fünf Mikrometern bestehend aus dem Kunstharz oberhalb der bedruckten Papierschicht ausgebildet ist.

Die Druckschrift US 2002/0007909 A1 offenbart ein Dekorprodukt umfassend zwei Papierlagen, nämlich ein Auflagepapier und ein bedrucktes Dekorpapier, wobei sowohl das Auflagepapier als auch das Dekorpapier mit einem MelaminFormaldehydharz imprägniert sind und unter Hitze und Druck miteinander verbunden wurden.

Die Druckschrift US 3983307 B offenbart ein Laminat umfassend eine Papierlage, eine Dekorlage und eine Beschichtung auf der Dekorlage, wobei die Papierlage und die Dekorlage mit einem Acrylkunstharz imprägniert sind und die Beschichtung auf der Dekorlage ebenfalls ein Acrylkunstharz umfaßt. Die drei Schichten sind durch Laminieren miteinander verbunden.

Die Druckschrift DE 20 2004 018 710 U1 offenbart ein Werkstück mit einer strukturierten Oberfläche umfassend ein Trägermaterial, eine erste Beschichtung und eine zweite Beschichtung, wobei die zweite Beschichtung eine räumlich variierende Verteilung der Auftragsmenge aufweist.

Die Druckschrift DE 35 03 666 A1 offenbart einen Beschichtungswerkstoff auf Basis einer mit ungesättigten Polyesterharzen getränkten Papierbahn, welche in aufgewickeltem Zustand und ohne äußere Wärmezuführung härtbar ist.

Die Druckschrift WO 02/04206 A1 offenbart ein Verfahren zum Herstellen von Bodenbelagselementen, wobei ein Dekorpapier mit einem Auflagepapier, welche beide mit einem Melaminformaldehydharz getränkt sind, laminiert wird und in einer Bandpresse mit einem Polyurethankern verbunden wird, wobei die Bodenbelagsplatten ausgebildet werden.

Es ist Aufgabe der Erfindung ein Verfahren zum Herstellen eines Dekorprodukts, ein Dekorprodukt und eine Verwendung eines Dekorprodukts zum Herstellen einer dekorierten Trägerfläche bereitzustellen, wobei ein einfaches, material- und zeitsparendes Herstellen von dekorierten Trägerflächen ermöglicht wird.

Die Aufgabe wird durch das Verfahren mit den Merkmalen des Anspruchs 1, das Dekorprodukt mit den Merkmalen des Anspruchs 7 und die Verwendung mit den Merkmalen des Anspruchs 12 gelöst. Bevorzugte Ausführungsvarianten und/oder Ausführungsformen sind Gegenstand der abhängigen Ansprüche.

### Verfahren zum Herstellen eines Dekorprodukts gemäß einem Aspekt

Ein Aspekt der vorliegenden Erfindung betrifft ein Verfahren zum Herstellen eines Dekorprodukts, umfassend die Schritte:
- Bereitstellen einer Papierlage mit
   -- einer Haftseite und
   -- einer Dekorseite;
- zumindest bereichsweises Beschichten der Dekorseite der Papierlage mit einer Lackschicht;
- partielles Tränken der Papierlage über die Haftseite mit einem Duroplast-Vorprodukt und/oder einem Thermoplast wobei die Dekorseite zumindest bereichsweise frei von dem Duroplast-Vorprodukt und/oder dem Thermoplast bleibt.

Vorteilhafterweise nutzt die Erfindung die Erkenntnis, daß ein partielles Tränken der Papierlage ohne ein Durchdringen der Papierlage mit einem Duroplast-Vorprodukt und/oder einem Thermoplast sowie ein Beschichten mit einer Lackschicht (Lackieren) der Papierlage ohne ein Durchdringen der Papierlage mit dem Lack möglich ist.

Vorteilhafterweise kann die Dekorseite der Papierlage einfach und mit hoher Qualität, insbesondere mit einem Dekor, bedruckt werden, insbesondere da der zu bedruckende Bereich bzw. die zu bedruckende Oberfläche der Papierlage vor dem Lackieren bzw. partiellen Tränken frei von Lack, Duroplast-Vorprodukt und/oder Thermoplast ist. Weiter vorteilhafterweise haftet die Lackschicht ohne weitere Haftvermittler an der Papierlage. Folglich ist es vorteilhafterweise nicht notwendig, bei der Weiterverarbeitung die Dekorseite durch Schleifen und/oder Aufbringen von Haftvermittler und/oder Corona nachzubehandeln. Somit können vorteilhafterweise vorgedruckte Dekorprodukte bzw. Grundierfilme bei der Herstellung von Holzwerkstoffplatten für Fußböden und Möbel eingesetzt werden.

Weiter vorteilhafterweise kann die Haftseite der partiell getränkten Papierlage durch thermisches Aktivieren des Duroplast-Vorprodukts und/oder des Thermoplasts an einem weiteren Element, z.B. einer Trägerplatte, befestigt werden, wodurch kein weiteres Haftmittel notwendig ist. Vorteilhafterweise ist das erfindungsgemäße Dekorprodukt einfach und qualitativ hochwertig bedruckbar, wobei das Dekorprodukt unabhängig von dem gewünschten Dekormuster ist, wodurch die Lagerhaltung vereinfacht wird. Somit haftet weiter vorteilhafterweise die Lackschicht ohne weitere Haftvermittler an der partiell getränkten Papierlage, auch wenn das Duroplast-Vorprodukt und/oder das Thermoplast thermisch aktiviert wurde. Dies gilt insbesondere deshalb, da durch das partielle Tränken der Papierlage lediglich eine solche Menge des Duroplast-Vorprodukts und/oder des Thermoplasts an der Haftseite der Papierlage angeordnet ist, daß auch bei thermischer Aktivierung im wesentlichen kein Duroplast-Vorprodukt und/oder kein Thermoplast an die Dekorseite gelangt. Bei der thermischen Aktivierung weicht das Duroplast-Vorprodukt und/oder das Thermoplast auf. Insbesondere schmilzt das Duroplast-Vorprodukt und/oder das Thermoplast.

Die Haftseite der Papierlage - auch als Rückseite bezeichenbar - ist ausgelegt an einer Trägerfläche, insbesondere an einer flächigen Trägerplatte angeordnet zu werden bzw. zu sein. Die Dekorseite der Papierlage bzw. die Vorderseite ist die der Haftseite entgegengesetzte Seite der Papierlage. Bevorzugt weist die Papierlage eine Grammatur von 20-200 g/m² auf.

Bevorzugt kann zur Durchführung des Verfahrens auch eine bereits partiell getränkte Papierlage bereitgestellt werden. In anderen Worten ist die bereitgestellte Papierlage zumindest bereichsweise über die Haftseite partiell mit einer Tränkmasse bzw. einem Tränkmaterial getränkt, wobei die Tränkmasse ein Duromer-Vorprodukt bzw. Duroplast-Vorprodukt und/oder ein Plastomer bzw. Thermoplast ist. Das Bereitstellen der partiell getränkten Papierlage kann auch das partielle Tränken der Papierlage von der Haftseite her mit der Tränkmasse umfassen.

Mit anderen Worten kann ein Verfahren zum Herstellen eines Dekorprodukts, die folgenden Schritte umfassen:
- Bereitstellen einer Papierlage mit
   -- einer Haftseite, wobei die Papierlage über die Haftseite mit einem Duromer/Duroplast-Vorprodukt und/oder einem Plastomer/Thermoplast partiell getränkt ist,
      und mit
   -- einer Dekorseite, wobei die Dekorseite zumindest bereichsweise frei von dem Duroplast-Vorprodukt und/oder dem Thermoplast ist;
- zumindest bereichsweises Beschichten der Dekorseite der Papierlage mit einer Lackschicht.

Die Vorteile der Erfindung sind dabei sowohl erzielbar, wenn die Papierlage zuerst partiell über die Haftseite mit der Tränkmasse, also einem Duromer/Duroplast-Vorprodukt und/oder einem Plastomer/Thermoplast, getränkt und anschließend auf der Dekorseite lackiert wird, als auch, wenn die Reihenfolge von tränken und lackieren umgekehrt wird. Vorteilhafterweise kann die Dekorseite der Papierlage auch mit hoher Qualität bedruckt werden, wenn das partielle Tränken vor dem Bedrucken erfolgt, da der zu bedruckende Bereich bzw. die zu bedruckende Oberfläche der Papierlage im wesentlichen frei von Duroplast-Vorprodukt und/oder Thermoplast bleibt.

Weiterhin ist es nicht notwendig die dekorseitige Papierlage ab Werk mit einer Lackschicht zu versehen. Vielmehr kann die Lackschicht auch nach dem Kaschieren des Dekorproduktes auf eine Trägerfläche bzw. Trägerplatte ausgebildet werden.

Das partielle Tränken im Sinne der Erfindung beschreibt, daß ein Porenraum der Papierlage nicht vollständig durch die Tränkmasse gefüllt ist. Der Grad der Porenraumfüllung wird als Sättigung bezeichnet, wobei die Sättigung eine dimensionslose Größe mit einem Wertebereich von 0 bis 1 ist.

Da die Papierlage von der Haftseite bzw. von der Rückseite her mit der Tränkmasse getränkt ist bzw. wird, sinkt die lokale Sättigung des Porenraumes der Papierlage mit der Tränkmasse von einem Maximalwert an der Haftseite zu einem Sättigungswert etwa gleich 0, vorzugsweise genau 0 an der Dekorseite der Papierlage. Insbesondere ist die lokale Sättigung an der Haftseite gleich 1, das heißt, daß der Porenraum der Papierlage an der Haftseite vollständig mit der Tränkmasse gefüllt ist.

Daß die Papierlage zumindest bereichsweise partiell getränkt ist bzw. partiell getränkt wird, bedeutet, daß mindestens 50 Prozent, bevorzugt mindestens 80 Prozent, weiter bevorzugt mindestens 90 Prozent, weiter bevorzugt mindestens 95 Prozent, insbesondere mindestens 99 Prozent, der Fläche der Haftseite die Papierlage partiell getränkt ist bzw. wird. Ebenso gilt, daß auf mindestens 50 Prozent, bevorzugt mindestens 80 Prozent, weiter bevorzugt mindestens 90 Prozent, weiter bevorzugt mindestens 95 Prozent, insbesondere mindestens 99 Prozent, besonders bevorzugt 100%, der gegenüberliegenden bzw. vorderseitigen Fläche, d.h. der Dekorseite, frei von der Tränkmasse ist. Die verbleibende nicht partiell getränkte Papierlage kann zumindest bereichsweise nicht getränkt sein und/oder zumindest bereichsweise vollständig getränkt sein. Das heißt, daß die Haftseite des nicht getränkten Bereiches der Papierlage frei von Tränkmasse ist bzw. daß die Dekorseite des vollständig getränkten Bereiches der Papierlage mit Tränkmasse getränkt ist. Insbesondere kann ein Rand bzw. können mehrere Ränder der Papierlage während des partiellen Tränkens aufgrund des Tränkverfahrens frei von Tränkmasse bleiben oder vollständig getränkt werden. Der Rand kann zwischen 1 mm und 25mm, vorzugsweise zwischen 2mm und 15mm, vorzugsweise zwischen 3mm und 10mm breit sein.

Vorzugsweise bleiben mindestens 50 Prozent, bevorzugt mindestens 80 Prozent, weiter bevorzugt mindestens 90 Prozent, weiter bevorzugt mindestens 95 Prozent, insbesondere mindestens 99 Prozent oder 100%, der Fläche der Haftseite der Papierlage frei von der Lackschicht. Mit anderen Worten dringt der Lack beim dekorseitigen Beschichten im wesentlichen nicht zur Haftseite durch.

Partiell getränkt beinhaltet insbesondere auch, daß in Dickenrichtung der Papierlage die Tränkmasse von der Haftseite ausgehend die Papierlage nicht vollständig durchdringt, sondern lediglich zwischen etwa 2 Prozent und etwa 80 Prozent, vorzugsweise zwischen etwa 5 Prozent und etwa 60 Prozent, besonders bevorzugt zwischen etwa 7 Prozent und etwa 50 Prozent, insbesondere etwa 10 Prozent der Dicke in die Papierlage eindringt.

Ferner kann das partielle Tränken umfassen, daß an der Haftseite der Papierbahn und außerhalb des Porenraumes eine Schicht aus Tränkmasse ausgebildet wird. Mit anderen Worten kann die Papierlage derart bereitgestellt sein, daß an bzw. auf der Haftseite der Papierlage eine Schicht aus Tränkmasse angeordnet ist. Die Tränkmasse kann verfestigt bzw. getrocknet werden bzw. sein.

Unter der Tränkmasse im Sinne der Erfindung wird ein Duromer- bzw. Duroplast-Vorprodukt und/oder ein Plastomer bzw. Thermoplast verstanden.

Ein Duromer, auch Duroplast genannt, ist ein Kunststoff, welcher nach der Aushärtung bzw. Polymerisation, d.h. als Duromer-Endprodukt, im wesentlichen nicht mehr verformbar ist bzw. bei einer Verformung bricht. Während des Aushärtungsprozesses, d.h. beim Übergang von einem Duroplast-Vorprodukt zu einem Duroplast-Endprodukt bilden sich in dem Duroplast-Vorprodukt lineare Kettenmoleküle, die sich auch untereinander dreidimensional vernetzen und dabei eine stabile Struktur bilden. Ein Duroplast-Endprodukt ist daher ein harter Kunststoff, der über chemische Hauptvalenzbindungen dreidimensional fest vernetzt ist. Die Vernetzung erfolgt beim Mischen von Duroplast-Vorprodukten mit Verzweigungsstellen und wird entweder bei Raumtemperatur chemisch und/oder bei hohen Temperaturen thermisch aktiviert. Duroplaste können aufgrund ihrer Vernetzung nicht aufgeschmolzen werden und zerfallen nach Überschreiten der Zersetzungstemperatur. Bevorzugte Duromere bzw. Duroplaste sind Alkydharz, Epoxidharz, Harnstoffharz, Melaminharz, Phenolharz, Polyamidharz, Polyesterharz, Polyurethanharz und Vinylesterharz. In der vorliegenden Anmeldung wird zwischen einem Duroplast-Vorprodukt und einem Duroplast-Endprodukt unterschieden.

Ein Duroplast-Vorprodukt ist ein noch auszuhärtende bzw. noch zu polymerisierendes Duroplast. In anderen Worten sind in einem Duroplast-Vorprodukt nur ein Bruchteil der Kettenmoleküle vernetzt und/oder sind die Kettenmoleküle im wesentlichen ausschließlich linear vernetzt, wohingegen bei einem Duroplast-Endprodukt alle Kettenmoleküle vernetzt sind und/oder die Kettenmoleküle dreidimensional vernetzt sind. Somit kann ein Duroplast-Vorprodukt in ein Duroplast-Endprodukt übergehen, jedoch nicht umgekehrt.

Ein Beispiel für einen Duroplasten ist Melamin, wobei das zugehörigen Duroplast-Vorprodukt insbesondere Melamin-Formaldehydharz sein kann, das auch als Melaminharz bezeichnet werden kann. Grundsätzlich werden die Duroplast-Vorprodukte als Duroplastharz bezeichnet. In der Fachwelt werden jedoch die Bezeichnungen für den Duroplasten sowie das Duroplast-Vorprodukt häufig synonym verwendet. Dabei zeichnet sich das Duroplast-Vorprodukt dadurch aus, daß es in einem Lösungsmittel, z.B. Wasser gelöst werden kann. In der vorliegenden Anmeldung sind in gelöstem Zustand die Duroplast-Vorprodukte gemeint, gleich ob diese namentlich als Duroplast oder Duroplastharz bezeichnet sind. In wässriger Lösung sind die Harzmoleküle, also z.B. Melaminharzmoleküle, zum Großteil lediglich linear vernetzt. In diesem Zustand kann die Papierlage mit der wässrigen Lösung des Melaminharzes partiell getränkt werden. Verdampft das Wasser aus der partiell getränkten Papierlage bleibt das Melaminharz als beispielhaftes Duroplast-Vorprodukt in und an der Papierlage zurück, d.h. es bleibt im wesentlichen linear vernetztes Melaminharz in und an der Papierlage zurück. Durch Einfluß von Temperatur über 160°C und/oder Druck werden die Melaminharzmoleküle dreidimensional vernetzt, wobei das Duroplast-Endprodukt, also Melamin, entsteht.

Die Begriffe Duromer und Duroplast können synonym verwendet werden. Ebenso können die Begriffe Duromer-Vorprodukt, Duroplastharz und Duroplast-Vorprodukt synonym verwendet werden und die Begriffe Duromer-Endprodukt und Duroplast-Endprodukt können synonym verwendet werden.

Ein Plastomer, auch Thermoplast genannt, ist ein Kunststoff, welcher im Gegensatz zu einem Duroplast aus wenig oder nicht verzweigten Kohlenstoffketten aufgebaut ist, die nur durch schwache Bindungen miteinander verbunden sind, so daß ein Thermoplast aufgrund der fehlenden Vernetzungsstellen aufschmelzbar ist bzw. sich in einem bestimmten Temperaturbereich einfach, insbesondere thermoplastisch verformen läßt. Dieser Vorgang ist reversibel, das heißt er kann durch Abkühlung und Wiedererwärmung bis in den geschmolzenen Zustand beliebig oft wiederholt werden, solange nicht durch Überhitzung die thermische Zersetzung des Materials einsetzt. Bevorzugte Plastomere bzw. Thermoplaste sind Acrylnitril-Butadien-Styrol (ABS), Polyamide (PA), Polymethylmethacrylat (PMMA), Polycarbonat (PC), Polyethylenterephthalat (PET), Polyethylen (PE), Polypropylen (PP), Polystyrol (PS), Polyvinylchlorid (PVC) und Zelluloid.

Die Begriffe Plastomer und Thermoplast können synonym verwendet werden.

Die bereitgestellte Papierlage wird in dem erfindungsgemäßen Verfahren auf der Dekorseite zumindest bereichsweise mit einer Lackschicht beschichtet. Das zumindest bereichsweise Beschichten im Sinne der Erfindung beschreibt, daß die Dekorseite der Papierlage nach der Durchführung des Verfahrens zu mindestens 80 Prozent, bevorzugt zu mindestens 85 Prozent, weiter bevorzugt zu mindestens 90 Prozent, weiter bevorzugt mindestens 95 Prozent, insbesondere zu mindestens 99 Prozent, oder vollständig mit einer Lackschicht beschichtet bzw. bedeckt bzw. überzogen Weiterhin vorzugsweise ist die Dekorseite der Papierlage nach der Durchführung des Verfahrens zu weniger als 99 Prozent, besonders bevorzugt zu weniger als 95 Prozent mit einer Lackschicht beschichtet bzw. bedeckt bzw. überzogen. Weiterhin vorzugsweise ist die Dekorseite der Papierlage nach der Durchführung des Verfahrens zwischen etwa 85 Prozent und etwa 95 Prozent, beispielsweise etwa 95 Prozent mit einer Lackschicht beschichtet bzw. bedeckt bzw. überzogen.

Insbesondere bleibt die entsprechende gegenüberliegende bzw. rückseitige Fläche, d.h. die Haftseite, im wesentlichen frei von Lack, wobei "im wesentlichen" bedeutet, daß insbesondere ein Randbereich der Papierlage auf der Haftseite, bevorzugt eine Fläche von weniger als 10 Prozent der Haftseitenfläche, oder weniger als 5 Prozent der Haftseitenfläche während der Beschichtung der Dekorseite mit der Lackschicht aufgrund des Beschichtungsverfahrens mit Lack beschichtet werden kann. Beispielsweise kann ein Rand zwischen 1 mm und 25 mm, vorzugsweise zwischen 2 mm und 15 mm, vorzugsweise zwischen 3 mm und 10 mm der Haftseite mit Lack beschichtet sein.

Lack im Sinne der Erfindung ist ein flüssiger Beschichtungsstoff, der dünn auf die Papierlage aufgetragen wird und durch einen chemischen und/oder physikalischen Härtungsvorgang zu einer im wesentlichen durchgehenden, vorzugsweise vollständig durchgehenden, festen Schicht aufgebaut wird. Die Lackschichtdicke beträgt vorzugsweise zwischen 2 und 50 µm.

Der Härtungsvorgang kann bevorzugt das Verdampfen eines Lösungsmittels, insbesondere Wasser, umfassen, wie beispielsweise bei Einkomponentensystemen (1 K-Lacke). Weiter bevorzugt kann der Härtungsvorgang eine chemische Reaktion umfassen, wie beispielsweise bei säurehärtenden Lacken bzw. bei Zweikomponentensystemen (2K-Lacke), wobei zwei Komponenten, z.B. Harz und Härter gemischt werden und chemisch reagieren und trocknen.

Säurehärtende Lacke bestehen hauptsächlich aus einem Aminoharz, z.B. Harnstoff-und/oder Melaminharz, gelöst in Wasser. Weiter bevorzugt kann der Härtungsvorgang des Lackes mittels Strahlenhärtung erfolgen, wobei der Lack vorteilhafterweise lösemittelfrei sein kann.

Strahlenhärtung bezeichnet ein Verfahren, bei dem mit Hilfe von energiereicher Strahlung, z.B. ultravioletter Strahlung und/oder Elektronenstrahlung reaktive Bestandteile des Lackes von einem niedermolekularen in einen hochmolekularen Zustand überführt werden, so daß diese in einen festen Zustand übergehen und der Lack einen festen und trockenen Film ausbildet. Als Strahlung dient vorzugsweise eine Ultraviolett-Lichtquelle, wie beispielsweise eine Galliumdampf- und/oder Quecksilberdampflampe und/oder eine Elektronenstrahlquelle.

Bevorzugt ist der Lack pigmentfrei. Soll der natürliche Farbton der Lackschicht verändert werden, müssen Pigmente, z.B. Titandioxid, zugegeben werden. Der Lack kann auch Pigmente aufweisen, wobei beispielsweise bei Verwendung eines pigmenthaltigen Lacks nach Aushärten des Lacks die Papierlage nur noch bedingt, vorzugsweise nicht mehr durch den Lack hindurch sichtbar ist.

Vorzugsweise umfaßt das Verfahren das Bereitstellen einer vorimprägnierten Papierlage. Dabei kann das Vorimprägnieren der Papierlage während oder nach der Papierherstellung erfolgen. Dazu kann ein Vorimprägnierungsmittel entweder zu der zu Papier zu verarbeitenden Papierrohmasse hinzugeschlagen werden oder das Vorimprägnierungsmittel wird nach der Herstellung der Papierlage einseitig oder beidseitig aufgetragen, so daß das Vorimprägnierungsmittel partiell in die Papierlage eindringt oder die Papierlage vollständig durchdringt.

Das Vorimprägnierungsmittel kann aus einem Duroplast, einem Duroplastvorprodukt, einem Thermoplast oder einem Elastomer bestehen. Insbesondere kann das Vorimprägnierungsmittel aus einer reinen Acrylatdispersion oder einer Mischung einer Acrylatdispersion mit einem Harnstoff-Formaldehydharz bestehen. Dabei kann das Vorimprägnierungsmittel einen Gewichtsanteil von 1 Prozent bis 20 Prozent, bevorzugt von 5 Prozent bis 17 Prozent der Papierlage ausmachen, weiter bevorzugt 8 Prozent bis 15 Prozent. Bevorzugt wird das Vorimprägnierungsmittel lediglich auf der späteren Haftseite der Papierlage aufgetragen. Weiter bevorzugt ist das Vorimprägnierungsmittel partiell in die Papierlage eingedrungen, insbesondere zu etwa 5 Prozent bis etwa 15 Prozent der Papierlagendicke.

Vorteilhafterweise werden die Saugeigenschaften der Papierlage und somit die Fließfähigkeit der Tränkmasse in der Papierlage durch das Vorimprägnierungsmittel derart beinflußt, daß ein Durchtränken der Papierlage mittels der Tränkmasse im wesentlichen verhindert wird. Insbesondere wird durch die Vorimprägnierung die Porosität und die Permeabilität der Papierlage verringert und insbesondere wird der effektive hydraulische Durchmesser der präferentiellen Fließwege innerhalb der Papierlage verkleinert. Die Tränkmasse härtet somit aus bzw. verliert die Fließfähigkeit bevor die Papierlage durchtränkt ist.

Weiterhin erhöht die Vorimprägnierung das Flächengewicht bzw. die Grammatur, beispielsweise von 48 g/m² auf 60 g/m². Die Rohpapierlage weist dabei bevorzugt Grammaturen von etwa 36 g/m² bis etwa 104 g/m² auf, wobei dann die vorimprägnierte Papierlage bevorzugt Grammaturen von etwa 45 g/m² bis etwa 130 g/m² aufweist. Dabei wird die Wasseraufnahmekapazität im Vergleich zum Rohpapier verringert, bevorzugt auf einen Wert von etwa 20 g/m² bis etwa 35 g/m². Durch die Vorimprägnierung wird vorteilhafterweise die Festigkeit der Papierlage erhöht bei gleichzeitiger verbesserter Planlage und Bedruckbarkeit bzw. Lackierbarkeit. Insbesondere erfolgt zu einem späteren Zeitpunkt kein Farbumschlag durch eine Imprägnierung der Papierlage, da diese bereits imprägniert ist. Weiterhin ermöglicht eine vorimprägnierte Papierlage vorteilhafterweise eine relativ dünne Beschichtung einer Spanplatte im Vergleich zu einer Spanplatte, auf welche ein Laminat (z.B. HPL, LPL oder CPL-Laminat) aufkaschiert ist. Typischerweise beträgt die resultierende Beschichtungsdicke mittels der vorimprägnierten Papierlage etwa 0,06 mm bis etwa 0,13 mm gegenüber einer Beschichtungsdicke von etwa 0,3 mm bis etwa 1,1 mm bei einem der oben genannten Laminate.

Bevorzugt kann das Bereitstellen der vorimprägnierten Papierlage auch ein Herstellen derselben umfassen. Beispielhaft kann die Vorimprägnierung der Papierlage in einen herkömmlichen Papierherstellungsprozeß integriert werden. Dabei werden Zellstoff, Chemikalien (Additive), Pigmente (wie z.B. Titandioxid als Aufheller und/oder Farbpigmente) und Wasser gemischt, gemahlen und von groben Verunreinigungen gereinigt. Anschließend wird das Zellstoffasergemisch entwässert, beispielsweise mittels einer Siebpartie und/oder einer Presspartie. Nach dem Vortrocknen der entstandenen Rohpapierlage kann ein Vorimprägnierharz mittels einer Leimpresse auf bzw. in die Rohpapierlage aufgebracht bzw. eingebracht werden. In der Leimpresse kann die Rohpapierlage beispielsweise einen Vorimprägnierharzsumpf durchlaufen, welcher sich oberhalb eines Spaltes befindet, wobei der Spalt durch zwei gegenläufig rotierende Walzen der Leimpresse ausgebildet ist. Die vorimprägnierte Papierlage kann dann nachgetrocknet, geglättet und weiterverarbeitet oder zur Lagerung aufgerollt werden.

Vorzugsweise umfaßt das Verfahren weiter den Schritt: Bedrucken der Dekorseite mit einem Dekormuster vor dem Lackieren der Dekorseite. Dadurch wird das gedruckte Dekormuster vorteilhafterweise durch die anschließend auf die Dekorseite aufgetragene Lackschicht vor äußeren Einflüssen geschützt.

Insbesondere können die Lackschicht und die Druckfarbe, die zum Bedrucken der Dekorseite mit dem Dekormuster verwendet werden, aus einander nicht benetzenden Phasen bestehen, so daß die Lackschicht aufgrund der Oberflächenspannung zwischen den beiden Phasen von den Bereichen, in denen Druckfarbe an der Papierlage aufragt, weggedrängt werden. Folglich bleiben die durch die Druckfarbe erhabenen Bereiche im wesentlichen lackfrei und der Lack sammelt sich in Vertiefungen der Druckfarbe. Alternativ können die Lackschicht und die Druckfarbe aus einander benetzenden Phasen bestehen. In diesem Fall können die Druckfarbe und der Lack eine derart hohe Affinität zueinander haben, daß die zwischen der aufgetragenen Druckfarbe entstehenden Vertiefungen im wesentlichen lackfrei bleiben, da dorthin aufgrund der Benetzung der Druckfarbe nicht genügend Lack fließt, um eine Lackschicht auszubilden.

In einem Spezialfall sind die zwischen dem Lack, der Dekorfarbe und der Papierlage wirkenden Oberflächenspannungen sowie das durch die Druckfarbe ausgebildete Relief derart ausgelegt, daß insbesondere die Dekorseite der Papierlage vollständig mit einer Lackschicht beschichtet bzw. bedeckt bzw. überzogen ist.

Im Zusammenhang der vorliegenden Anmeldung können die Begriffe Dekormuster und Design synonym verwendet werden.

Vorzugsweise umfaßt das Verfahren weiter den Schritt: Bedrucken der Dekorseite mit einem Dekormuster bzw. Design nach dem Lackieren der Dekorseite.

Somit können an der Dekorseite zwei oder mehrere Schichten angeordnet werden, z.B. eine Schicht umfassend Dekorfarbe zum Herstellen des Dekormusters und, darüber oder darunter, Lack zum Herstellen der Lackschicht. Hierbei können sich die Dekorfarbe zum Herstellen der Dekorschicht, die das Dekormuster bildet, und der Lack zum Herstellen der Lackschicht mechanisch und/oder chemisch unterscheiden. Insbesondere ist es möglich, daß die Lackschicht die Dekorschicht vor Umwelteinflüssen schützt. Hierbei ist es möglich, daß die Dekorfarbe zum Herstellen des Dekormusters geeignet ist, im Gegensatz zu dem Lack jedoch empfindlich auf Umwelteinflüsse reagiert. Der Lack hingegen ist im Vergleich zur Dekorfarbe im wesentlichen ungeeignet, um ein Dekormuster herzustellen, jedoch gegenüber Umwelteinflüssen verhältnismäßig resistent. Insbesondere ist es möglich, daß auf einer Papierlage eine Schicht Dekorfarbe für ein erstes Dekormuster angeordnet ist, gefolgt von einer Lackschicht, gefolgt von einer weiteren Schicht Dekorfarbe für ein weiteres Dekormuster, usw. Für die Dekormuster können gleiche oder verschiedene Dekorfarben verwendet werden.

Weiter bevorzugt kann die ein Bedrucken der Dekorseite sowohl vor dem Lackieren als auch nach dem Lackieren erfolgen, wobei das Lackieren weiter bevorzugt mit einem transparenten Lack erfolgt. Vorteilhafterweise kann ein vor dem Lackieren gedrucktes Dekor bzw. Design zu einem späteren Zeitpunkt und/oder an einer anderen Stelle durch einen zweiten Dekordruck ergänzt werden.

Vorzugsweise erfolgt das Bedrucken der Dekorseite mittels eines Tiefdruckverfahrens. Weiter bevorzugt kann das Bedrucken der Dekorseite auch mittels Siebdruck, Offsetdruck, Flexodruck und/oder Digitaldruck erfolgen.

Vorzugsweise umfaßt das Verfahren weiter den Schritt: Auftragen einer Endlackschicht auf die Lackschicht. Weiter vorzugsweise ist die gehärtete Endlackschicht härter als die Lackschicht, so daß vorteilhafterweise die mechanische Belastbarkeit der Oberfläche des Dekorprodukts auf der Dekorseite erhöht wird. Die Endlackschicht kann auch auf eine Dekorschicht aufgetragen werden. Nachfolgend werden Beispiele einer möglichen Schichtanordnungen eines Dekorprodukts beschrieben:
a. Eine Dekorschicht, gefolgt von einer Lackschicht. In diesem Fall ist die Lackschicht auch die Endlackschicht.
b. Eine Dekorschicht, gefolgt von einer Lackschicht gefolgt von einer Endlackschicht.
c. Eine Dekorschicht, gefolgt von einer Lackschicht gefolgt von einer Dekorschicht gefolgt von einer Endlackschicht.
d. Eine Lackschicht gefolgt von einer Dekorschicht.

Der Endlack kann ein Ein- und/oder Zweikomponentensystem sowie einen UV-und/oder Elektronenstrahl härtenden Lack umfassen, wobei das Härten des Lackes entsprechend durch Verdampfen eines Lösungsmittels, durch chemisches Härten oder durch Bestrahlung mit UV-Licht oder Elektronenstrahlen erfolgen kann.

Vorteilhafterweise haftet die Endlackschicht ohne mechanische haftverbessernde Bearbeitung, z.B. ohne Anschleifen der Lackschicht und/oder ohne weitere Haftvermittler an der Lackschicht oder der Dekorschicht, da die Lackschicht oder die Dekorschicht im Gegensatz zu dem Duroplast-Vorprodukt bzw. dem Thermoplast einen geeigneten Haftgrund für den Endlack darstellt.

Bevorzugt wird ein derartiger Endlack verwendet bzw. aufgetragen, der an der Lackschicht haftet.

Beispielsweise ist es möglich, daß die Lackschicht einen Lack umfaßt, der auch eine Endlackschicht bilden kann. Es ist auch möglich, daß die Lackschicht aus einem Lack besteht der das Dekor, d.h. die Dekorschicht schützt und derart flexibel ist, daß das Dekorprodukt gerollt werden kann. Die Endlackschicht kann beispielsweise einen Lack umfassen, der gegenüber der Lackschicht eine verbesserte Schutzwirkung aufweist, jedoch eine eingeschränkte Flexibilität aufweist, insbesondere nicht mehr flexibel ist. Somit kann beispielsweise nach Anbringen des Endlacks das Dekorprodukt nicht mehr gerollt werden. Der Endlack wird somit vorzugsweise während oder nach dem Anordnen des Dekorprodukts an einer Trägerplatte an der Lackschicht angeordnet. Wird kein Endlack auf bzw. an der Lackschicht angeordnet, so ist die Lackschicht gleichzeitig die Endlackschicht.

Vorzugsweise bleibt die Lackschicht, insbesondere nach Aushärten der Lackschicht, bis zum Auftragen der Endlackschicht chemisch und/oder mechanisch unverändert. Insbesondere wird die Lackschicht nicht durch mechanisches Anschleifen zur Verbesserung der Hafteigenschaften verändert, so daß das Verfahren vorteilhafterweise besonders einfach durchgeführt werden kann.

Vorzugsweise ist das Duroplast-Vorprodukt ein Melamin-Harz.

Vorzugsweise erfolgt das Beschichten der Dekorseite mit einer Lackschicht mittels einer Meyerbarrakel oder mittels Walzenstühlen oder mittels des Kiss-Printing-Verfahrens oder mittels des Curtain-Verfahrens.

Vorzugsweise bedeckt die Lackschicht und/oder die Endlackschicht zwischen etwa 85 Prozent und etwa 95 Prozent der Dekorseite der Papierlage.

### Dekorprodukt gemäß einem Aspekt

Ein Aspekt der vorliegenden Erfindung betrifft ein Dekorprodukt, umfassend:
- eine Papierlage mit
   -- einer Haftseite, wobei die Papierlage über die Haftseite mit einem Duroplast-Vorprodukt oder einem Thermoplast partiell getränkt ist,
      und mit
   -- einer Dekorseite, wobei die Dekorseite zumindest bereichsweise frei von dem Duroplast-Vorprodukt oder dem Thermoplast ist;
- eine Lackschicht, die an der Dekorseite der Papierlage angeordnet ist und die Dekorseite zumindest bereichsweise bedeckt.

Vorteilhafterweise ist das Dekorprodukt durch thermisches Aktivieren des an der Haftseite angeordneten Duroplast-Vorprodukts und/oder Thermoplasts an einer Trägerfläche, insbesondere an einer Trägerplatte befestigbar bzw. kaschierbar. Das thermische Aktivieren kann unter Druckeinwirkung erfolgen.

Vorzugsweise ist mindestens 50 Prozent, bevorzugt mindestens 80 Prozent, weiter bevorzugt mindestens 90 Prozent, weiter bevorzugt mindestens 95 Prozent, insbesondere mindestens 99 Prozent, der Fläche der Haftseite der Papierlage partiell mit der Tränkmasse (d.h. dem Duroplast-Vorprodukt bzw. dem Thermoplasten) getränkt. Weiter bevorzugt ist mindestens 50 Prozent, bevorzugt mindestens 80 Prozent, weiter bevorzugt mindestens 90 Prozent, weiter bevorzugt mindestens 95 Prozent, insbesondere mindestens 99 Prozent, der gegenüberliegenden bzw. vorderseitigen Fläche, d.h. der Dekorseite, frei von der Tränkmasse. Die verbleibende nicht partiell getränkte Papierlage kann zumindest bereichsweise nicht getränkt sein und/oder zumindest bereichsweise vollständig getränkt sein. Vorzugsweise sind mindestens 50 Prozent, bevorzugt mindestens 80 Prozent, weiter bevorzugt mindestens 90 Prozent, weiter bevorzugt mindestens 95 Prozent, insbesondere mindestens 99 Prozent, der Fläche der Haftseite der Papierlage frei von der Lackschicht.

Vorzugsweise ist die Papierlage eine vorimprägnierte Papierlage. Bevorzugt umfaßt das Vorimprägnierungsmittel einen Duroplasten, ein Duroplastvorprodukt, einen Thermoplasten oder ein Elastomer. Das Vorimprägnierungsmittel kann beispielsweise eine reine Acrylatdispersion sein. Das Vorimprägnierungsmittel kann beispielsweise auch eine Mischung einer Acrylatdispersion mit einem Harnstoff-Formaldehydharz sein. Das Vorimprägnierungsmittel kann einen Gewichtsanteil von 1 Prozent bis 20 Prozent, bevorzugt von 5 Prozent bis 17 Prozent der Papierlage ausmachen, weiter bevorzugt 8 Prozent bis 15 Prozent. Dabei kann sowohl lediglich der Bereich der Haftseite als auch beidseitig mit dem Vorimprägnierungsmittel getränkt bzw. behandelt sein. Weiter kann das Vorimprägnierungsmittel, insbesondere gleichmäßig, in der gesamten Papierlage verteilt sein. Weiter bevorzugt ist das Vorimprägnierungsmittel lediglich partiell einseitig oder beidseitig in die Papierlage eingedrungen, insbesondere zu etwa 5 Prozent bis etwa 15 Prozent der Papierlagendicke.

Vorzugsweise ist die Dekorseite mit einem Dekormuster bedruckt.

Vorzugsweise ist auf der Lackschicht zumindest bereichsweise eine Endlackschicht aufgetragen. Weiter vorzugsweise ist die gehärtete Endlackschicht härter als die Lackschicht, so daß vorteilhafterweise die mechanische und/oder chemische Belastbarkeit der Oberfläche des Dekorprodukts auf der Dekorseite gegenüber der Lackschicht erhöht wird.

Vorzugsweise ist das Duroplast-Vorprodukt ein Melamin-Harz. Weiter bevorzugt kann das Duroplast-Vorprodukt ein Alkydharz, ein Epoxidharz, ein Harnstoffharz, ein Phenolharz, ein Polyamidharz, ein Polyesterharz, ein Polyurethanharz oder ein Vinylesterharz sein.

Vorzugsweise umfaßt die Lackschicht bzw. die Endlackschicht einen säurehärtenden Lack. Weiter bevorzugt umfaßt die Lackschicht bzw. die Endlackschicht einen Lack, welcher mittels UV-Licht oder Elektronenstrahlen härtbar ist.

Vorzugsweise bedeckt die Lackschicht und/oder die Endlackschicht zwischen etwa 85 Prozent und etwa 95 Prozent der Dekorseite der Papierlage.

### Verwendung eines Dekorprodukts gemäß einem Aspekt

Ein Aspekt der vorliegenden Erfindung betrifft die Verwendung eines Dekorprodukts zum Herstellen einer dekorierten Trägerfläche, insbesondere einer dekorierten Trägerplatte, wobei
- eine Trägerfläche, insbesondere eine Trägerplatte bereitgestellt wird, und
- ein erfindungsgemäßes Dekorprodukt mit der Haftseite mittels des Duroplast-Vorprodukts oder des Thermoplasts unter Einwirkung von Wärme und/oder Druck an der Trägerfläche, insbesondere an der Trägerplatte befestigt wird.

Mit anderen Worten wird die Tränkmasse bzw. das Tränkmaterial, mit welcher die Papierlage des Dekorprodukts über die Haftseite partiell getränkt ist und welche ein Duroplast-Vorprodukt und/oder ein Thermoplast umfaßt, durch die Zufuhr von Wärmeenergie thermisch aktiviert. Die dabei auftretende Aktivierungstemperatur ist bevorzugt größer als etwa 60°C und kleiner als etwa 300°C. Besonders bevorzugt liegt die Aktivierungstemperatur zwischen etwa 60°C bis etwa 240°C. Dadurch wird die weitere Aushärtung bzw. Polymerisation des Duroplast-Vorprodukts zu einem Duroplast-Endprodukt initiiert und/oder das Thermoplast aufgeschmolzen. Beim Befestigen bzw. Kaschieren des erfindungsgemäßen Dekorprodukts an bzw. auf der Trägerplatte geht das Dekorprodukt mittels des polymerisierenden Duroplasts bzw. des aufgeschmolzenen Thermoplasts eine feste Verbindung mit der Trägerplatte ein, nachdem die Polymerisation abgeschlossen bzw. das Thermoplast erkaltet ist. Hierbei kann das Duroplast bzw. das Thermoplast zumindest bereichsweise in das Material der Trägerplatte eindringen. Das Duroplast kann beim Übergang vom Duroplast-Vorprodukt zu dem Duroplast-Endprodukt zumindest bereichsweise in das Trägermaterial eindringen und somit eine feste Verbindung zwischen der Trägerfläche bzw. der Trägerplatte und dem Dekorprodukt herstellen.

Bevorzugt kann das Befestigen des Dekorprodukts mittels Etagenpressen (Membran-, Kurztakt-, Rückkühl- und Furnierpressen) und/oder Kaschieranlagen (Kalander- oder Contipressen) erfolgen. Dabei wird das Duroplast-Vorprodukt und/oder das Thermoplast, welches die Papierlage des Dekorprodukts partiell tränkt, aufgeschmolzen, so daß sich nach dem Pressen und Abkühlen eine Verbindung zwischen dem Dekorprodukt und der Trägerplatte ausbildet, d.h. das Dekorprodukt an der Trägerplatte befestigt wird.

Mittels Membranpressen lassen sich dreidimensional geformte bzw. strukturierte Trägerplatten mit dem Dekorprodukt beschichten. In dem Verfahren übt eine unter pneumatischem Druck stehende beheizte, elastische Membran einen gleichmäßigen Druck auf das Bauteil aus. Das Pressen kann vorzugsweise durch Anlegen eines Unterdrucks auf der Gegenseite der Trägerplatte unterstützt werden. Auf diese Weise können Formteile, Flächen mit Ausfräsungen und Kanten der Trägerplatte in einem Arbeitsgang unter Wärmeeinwirkung dreidimensional beschichtet werden.

Beim Kurztaktpressen kann, vorzugsweise bei einem spezifischen Preßdruck von bis zu 1200 N/cm² und unter Wärmeeinwirkung das Duroplast-Vorprodukt und/oder das Thermoplast verflüssigt werden. Dabei kann das flüssige Duroplast-Vorprodukt und/oder Thermoplast und die Papierlage mittels der Oberfläche eines Strukturbleches geformt werden. Gleichzeitig wird durch diesen Prozeß die Verklebung des Dekorprodukts mit der Trägerplatte realisiert.

Beim Rückkühlpressen finden Mehretagenpressen zur Beschichtung von flächigen Trägerplatten mit dem Dekorprodukt Anwendung. Bei diesem Verfahren wird bei geschlossener Presse (d.h. unter Druck) die Aktivierungstemperatur durch Heizen erreicht. Danach wird der Verbund aus Trägerplatte und Dekorprodukt wieder abgekühlt. Der Prozeß wird bevorzugt zum Herstellen hochglänzender Oberflächen genutzt.

Bei der Verwendung vor Furnierpressen werden bevorzugt Preßdrücke von etwa 10 N/cm² bis 70 N/cm² angewandt. Furnierpressen finden meist in handwerklichen Betrieben wie Schreinereien Verwendung, um unter Druck und Hitze eine Beschichtung und eine Trägerplatte mittels eines vorher aufgebrachten und dann aushärtenden Leimsystems zu verbinden. Vorteilhafterweise kann durch das erfindungsgemäße Dekorprodukt auf eine zusätzliche Verwendung eines Leimes verzichtet werden. Dennoch ist es vorteilhafterweise möglich, das Dekorprodukt auch in einem im wesentlichen manuellen Prozeß fest mit einer Trägerplatte bzw. Trägerfläche zu verbinden.

Mittels kontinuierlich arbeitender Kaschieranlagen wird das Dekorprodukt mittels einer heißen Kalanderwalze auf die Trägerplatte kaschiert. Contipressen arbeiten ebenfalls kontinuierlich, wobei eine endlose Trägerplatte erzeugt wird. Sowohl die Trägerplatte als auch das dazugehörige Dekorprodukt entstehen in einem Arbeitsschritt. Bevorzugt handelt es sich bei der Trägerplatte um eine Holzwerkstoffplatte, wobei das Dekorprodukt während des Herstellungsprozesses von der Rolle zugeführt wird. Vorteilhafterweise wird die Verklebung und die Oberfläche des fertigen Produktes, d.h. der dekorierten Trägerplatte, ausschließlich über Druck und/oder Wärmeeinwirkung ausgebildet, d.h. ohne Einwirkung bzw. Verwendung von zusätzlichen Chemikalien.

Vorteilhafterweise kann das Dekorprodukt mit den oben genannten Verfahren ohne weitere Haftmittel an der Trägerplatte befestigt werden.

Bevorzugt ist die Trägerplatte eine Span-, Sperrholz-, Mehrschicht-, MDFplatte oder eine ähnliche Feststoffplatte bzw. die Trägerfläche eine Fläche hiervon.

Vorzugsweise wird nach dem Befestigen des Dekorprodukts an der Trägerfläche, insbesondere der Trägerplatte, bevorzugt ohne eine mechanische und/oder chemische Veränderung der Lackschicht, eine Endlackschicht zumindest bereichsweise auf der Dekorseite des Dekorprodukts aufgetragen. Weiter vorzugsweise ist die gehärtete Endlackschicht härter als die Lackschicht, so daß vorteilhafterweise die mechanische Belastbarkeit der Oberfläche des Dekorprodukts auf der Dekorseite erhöht wird. Weiter bevorzugt weist die Endlackschicht gegenüber der Dekorschicht und/oder der Lackschicht einen erhöhten Glanz auf.

Die Erfindung ist nicht auf die oben beschriebenen Aspekte bzw. Ausführungsformen beschränkt. Vielmehr können einzelne Merkmale der Aspekte und/oder Ausführungsformen beliebig miteinander kombiniert werden und insbesondere somit neue Ausführungsformen gebildet werden. In anderen Worten gelten die obigen Ausführungen zu den einzelnen Merkmalen des Verfahrens sinngemäß auch für das mit dem Verfahren hergestellte Produkt. Die Erfindung kann auch ein Verfahren zum Herstellen einer dekorierten Trägerplatte umfassen, wobei Trägerfläche, insbesondere eine Trägerplatte mit einem erfindungsgemäßen Dekorprodukt verbunden wird, insbesondere eine Trägerplatte mit einem erfindungsgemäßen Dekorprodukt kaschiert wird.

### Figurenbeschreibung

Nachfolgend werden bevorzugte Ausführungsformen der vorliegenden Erfindung anhand der beigefügten Zeichnungen beispielhaft erläutert. Es zeigt:
- Figur 1:: einen Querschnitt einer Ausführungsform eines Dekorprodukts;
- Figur 2:: einen Querschnitt einer Ausführungsform eines Dekorprodukts;
- Figur 3:: einen Querschnitt einer Ausführungsform eines Dekorprodukts;
- Figur 4:: eine bevorzugte Vorrichtung zur Durchführung eines bevorzugten Verfahrens zum partiellen Tränken bzw. Lackieren;
- Figur 5:: eine bevorzugte Vorrichtung zur Durchführung eines bevorzugten Verfahrens zum partiellen Tränken bzw. Lackieren;
- Figur 6:: eine bevorzugte Vorrichtung zur Durchführung eines bevorzugten Verfahrens zum partiellen Tränken bzw. Lackieren;
- Figur 7:: eine bevorzugte Vorrichtung zur Durchführung eines bevorzugten Verfahrens zum partiellen Tränken bzw. Lackieren;
- Figur 8:: eine bevorzugte Vorrichtung zur Durchführung eines bevorzugten Verfahrens zum partiellen Tränken bzw. Lackieren.

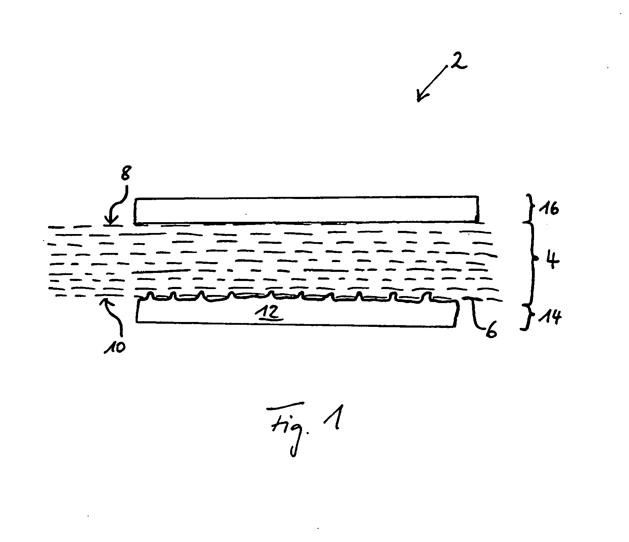

**Figur 1** zeigt ein Dekorprodukt 2 mit einer Papierlage 4. Die Papierlage umfaßt eine Vielzahl von Zellstoffasern 6 zwischen denen ein Porenraum ausgebildet ist. Die Papierlage 4 hat eine Dekorseite 8 und eine Haftseite 10. Von der Haftseite 10 her ist die Papierlage 4 mit einer Tränkmasse 12 bzw. einem Tränkmaterial 12 partiell getränkt. Die Tränkmasse kann ein Duroplast-Vorprodukt 12 oder ein Thermoplast 12 umfassen. Die Tränkmasse 12 kann eine wässrige Lösung von Melaminharz sein.

Der Porenraum der Papierlage 4 ist nicht vollständig durch die Tränkmasse 12 gefüllt, wobei in der gezeigten Ausführungsform nur die oberflächennächsten Poren der Haftseite 10 mit der Tränkmasse 12 gefüllt sind, während die oberflächennächsten Poren der Dekorseite 8 vorzugsweise frei von Tränkmasse 12 sind bzw. die Dekorseite 8 vorzugsweise frei von der Tränkmasse 12 ist. Ferner bildet die Tränkmasse 12 an der Haftseite der Papierlage 4 und außerhalb des Porenraumes eine Tränkmassenschicht 14 aus.

An der Dekorseite 8 der Papierlage 4 ist eine Lackschicht 16 angeordnet, welche die Dekorseite 8 bereichsweise bedeckt.

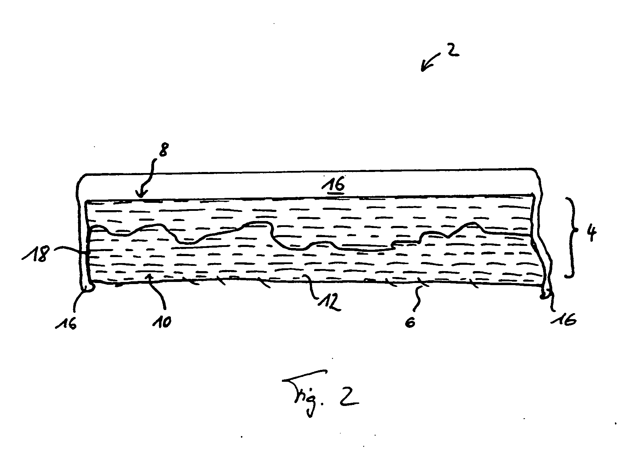

**Figur 2** zeigt ein weiteres Dekorprodukt 2, welches ähnlich zu dem in Figur 1 gezeigtem Dekorprodukt 2 ist, so daß dazu identische Merkmale in Figur 2 mit denselben Bezugszeichen bezeichnet werden. In dieser Ausführungsform ist die Papierlage 4 von der Haftseite 10 her mit der Tränkmasse 12, insbesondere als Duroplast-Vorprodukt 12 und/oder Thermoplast 12 ausgebildet, partiell getränkt, wobei die Tränkmasse 12 tiefer in die Papierlage 4 bzw. den Porenraum der Papierlage 4 eindringt. In der gezeigten Ausführungsform sind die Poren bis etwa zur mittleren Dicke der Papierlage 4 mit der Tränkmasse 12 gefüllt. Ferner bildet die Tränkmasse 12 außerhalb des Porenraumes der Papierlage 4 keine Tränkmassenschicht (wie in Figur 1) aus, da die Tränkmasse 12 sich lediglich im Porenraum befindet und vereinzelte Zellstoffasern 6 frei von Tränkmasse 12 sind. Es ist auch möglich, daß ähnlich wie in Figur 1 gezeigt ist, eine Schicht 14 mit Tränkmasse 12 an der Haftseite 10 der Papierlage angeordnet ist.

Die an der Dekorseite 8 der Papierlage 4 angeordnete Lackschicht 16 bedeckt auch den Rand 18 der Papierlage 4 und bereichsweise die Haftseite 10.

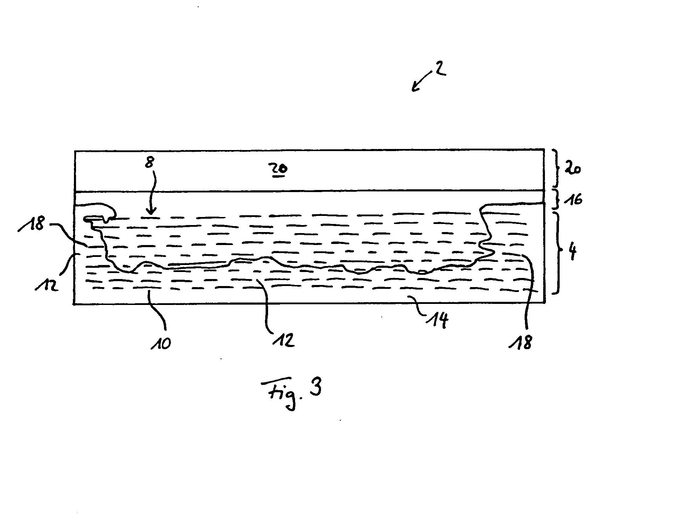

**Figur 3** zeigt ein weiteres Dekorprodukt 2, das ähnlich zu den in den Figuren 1 und 2 gezeigten Dekorprodukten 2 ist. Identische Merkmale werden in der Figur 3 deshalb mit denselben Bezugszeichen bezeichnet. In dieser Ausführungsform ist die Papierlage 4 bzw. deren Porenraum von der Haftseite 10 her zu etwa einem Drittel der Dicke der Papierlage 4 mit der Tränkmasse 12, das vorzugsweise ein Duroplast-Vorprodukt 12 und/oder Thermoplast 12 ist, partiell getränkt. Dazu bildet die Tränkmasse 12 außerhalb des Porenraumes der Papierlage 4 eine Tränkmassenschicht 14 aus. Die Tränkmasse 12 erstreckt sich über den Rand 18 der Papierlage 4 hinaus, um den Rand 18 der Papierlage 4 herum und bedeckt bereichsweise die Haftseite 10 der Papierlage 4. Im Bereich des Randes 18 ist die Papierlage 4 daher bereichsweise vollständig getränkt.

Die an der Dekorseite 8 der Papierlage 4 angeordnete Lackschicht 16 bedeckt daher die Haftseite 10, in dem die Lackschicht 16 bereichsweise an der tränkmassenfreien Dekorseite 8 der Papierlage 4 und bereichsweise an der getränkten Dekorseite 8 der Papierlage 4 angeordnet ist. Auf der Lackschicht 16 ist weiterhin eine Endlackschicht 20 angeordnet, deren Lack der gleiche Lack der Lackschicht 16 sein kann oder deren Lack einen von dem Lack der Lackschicht 16 verschiedenen, bevorzugt härteren, Lack umfassen kann. Es versteht sich, daß auch die in den Figuren 1 und 2 gezeigten Ausführungsformen eine Endlackschicht 20 aufweisen können.

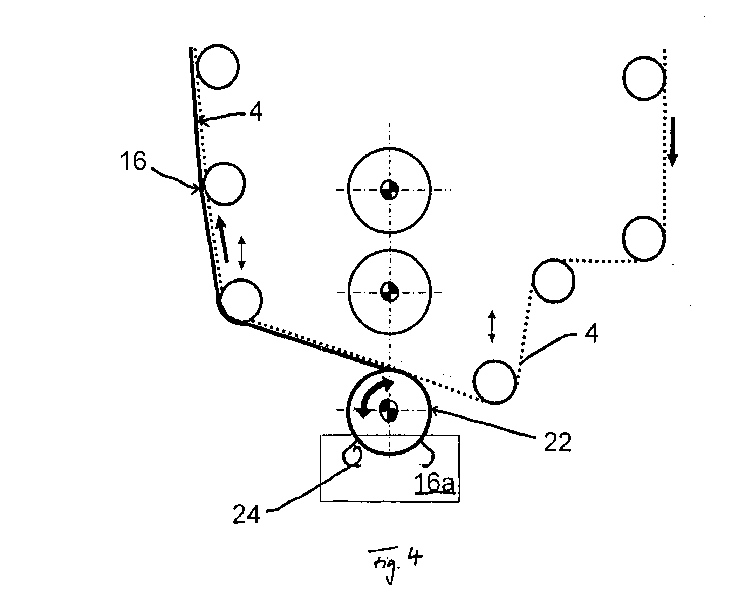

**Figur 4** zeigt eine bevorzugte Vorrichtung zur Durchführung eines bevorzugten Verfahrens zum partiellen Tränken der Papierlage 4 mit einer Tränkmasse 12 bzw. zum Beschichten der Papierlage 4 mit einer Lackschicht 16. Bei dem direkten Tränk- bzw. Beschichtungsverfahren taucht eine Auftragwalze 22 bereichsweise in den zur Beschichtung verwendeten Lack 16a. Über eine Kammerrakel 24 wird die von der Auftragwalze 22 aufgenommene Lackmenge begrenzt, so daß die Dicke der Lackschicht 16 auf der Papierlage 4 vorbestimmt werden kann.

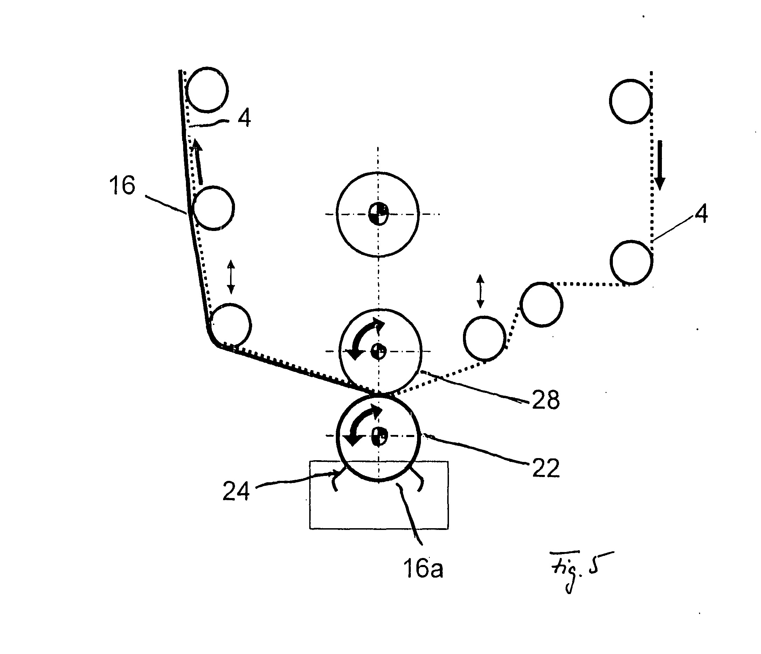

**Figur 5** zeigt eine weitere bevorzugte Vorrichtung zur Durchführung eines bevorzugten Verfahrens zum partiellen Tränken der Papierlage 4 mit einer Tränkmasse 12 bzw. zum Beschichten der Papierlage 4 mit einer Lackschicht 16. Bei diesem "Kiss-Printing" genannten Beschichtungsverfahren taucht eine Auftragwalze 22 bereichsweise in den zur Beschichtung verwendeten Lack 16a, wobei eine Kammerrakel 24 die aufgenommene Lackmenge begrenzt. Die Auftragwalze 22 überträgt den Lack 16a auf die Papierlage 4, wobei eine Gegenwalze 28 eine Anpreßkraft an die Papierlage 4 anlegt, so daß diese gegen die Auftragwalze 22 gepreßt wird.

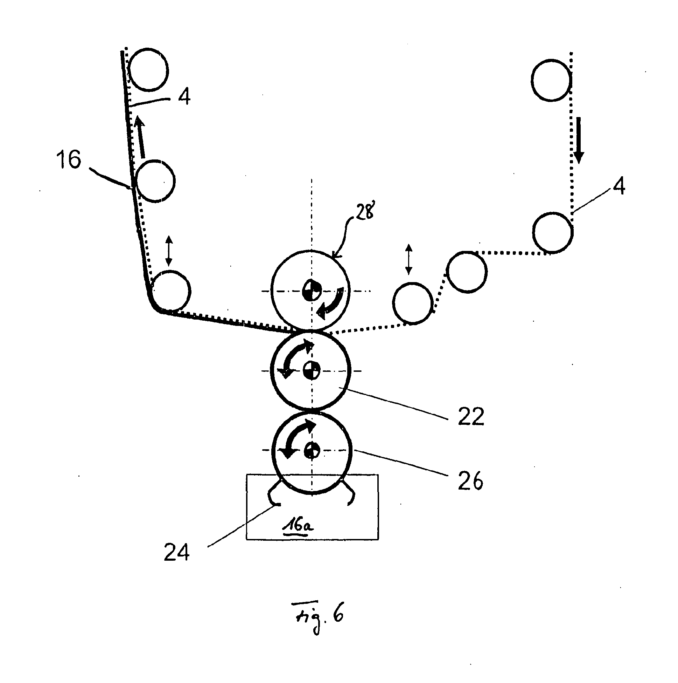

**Figur 6** zeigt eine weitere bevorzugte Vorrichtung zur Durchführung eines bevorzugten Verfahrens zum partiellen Tränken der Papierlage 4 mit einer Tränkmasse 12 bzw. zum Beschichten der Papierlage 4 mit einer Lackschicht 16. Bei diesem "Walzenstuhlverfahren" genannten Beschichtungsverfahren taucht eine Haschurenwalze 26 bereichsweise in den zur Beschichtung verwendeten Lack 16a, wobei eine Kammerrakel 24 die aufgenommene Lackmenge begrenzt. Die Haschurenwalze 26 überträgt den Lack 16a auf die Auftragwalze 22, wobei die Lackmenge vorteilhafterweise aufgrund der Verreibung zwischen der Haschurenwalze 26 und der Auftragwalze 22 besonders gleichmäßig auf der Auftragwalze verteilt ist, so daß die Lackschicht 16 besonders gleichmäßig auf die Papierlage 4 aufgetragen werden kann. Eine Gegenwalze 28 sorgt für einen Anpreßdruck der Papierlage 4 an die Auftragwalze 22. Durch den Anpreßdruck kann die Eindringtiefe des Lackes bzw. der Tränkmasse in die Papierlage 4 gesteuert werden.

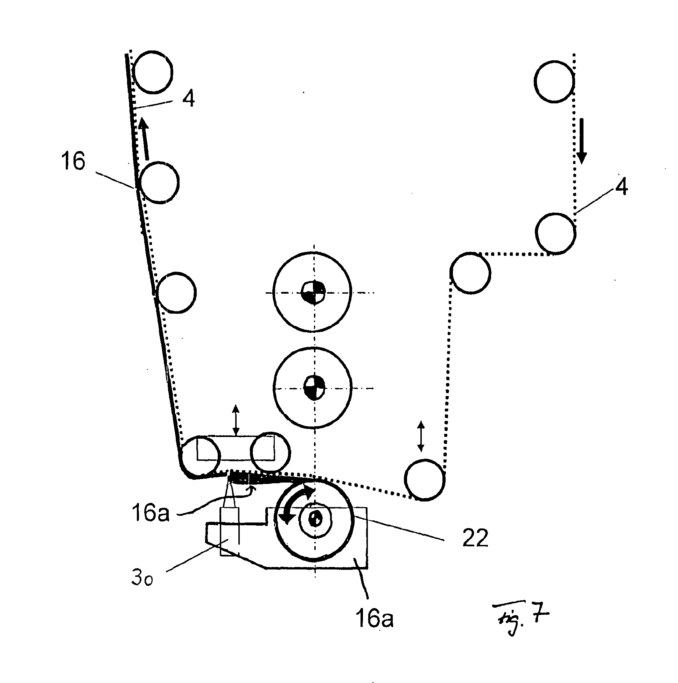

**Figur 7** zeigt eine weitere bevorzugte Vorrichtung zur Durchführung eines bevorzugten Verfahrens zum partiellen Tränken der Papierlage 4 mit einer Tränkmasse 12 bzw. zum Beschichten der Papierlage 4 mit einer Lackschicht 16. Bei diesem "Meyerbarrakelverfahren" genannten Beschichtungsverfahren taucht eine Auftragwalze 22 bereichsweise in den zur Beschichtung verwendeten Lack 16a. Die Auftragwalze 22 nimmt dabei einen Überschuß an Lack 16a auf und überträgt diesen auf die Papierlage 4. Im Anschluß daran wird durch eine Drahtrakel 30 bzw. eine Meyerbarrakel 30 der überschüssige Lack 16a wieder von der Papierlage 4 entfernt, so daß eine Lackschicht 16 mit einer vorbestimmten Dicke ausgebildet wird.

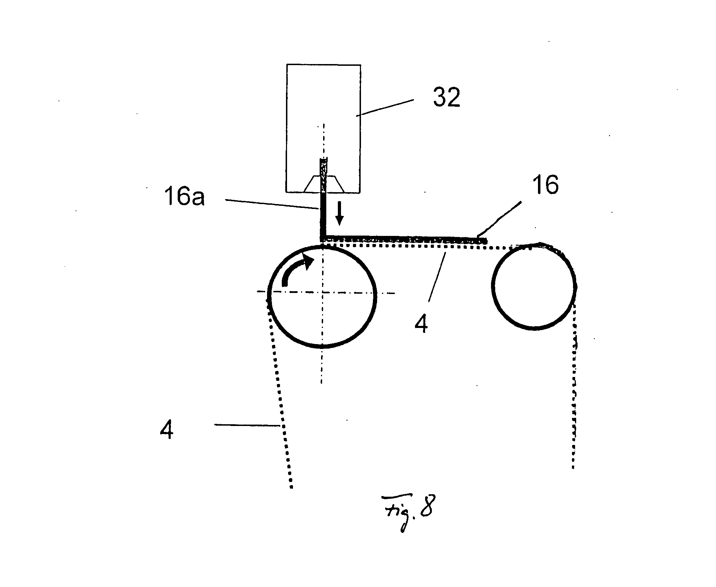

**Figur 8** zeigt eine weitere bevorzugte Vorrichtung zur Durchführung eines bevorzugten Verfahrens zum partiellen Tränken der Papierlage 4 mit einer Tränkmasse 12 bzw. zum Beschichten der Papierlage 4 mit einer Lackschicht 16. Bei diesem "Curtain Verfahren" genannten Beschichtungsverfahren wird die zu beschichtende Papierlage 4 kontinuierlich unterhalb einer Extrusionseinrichtung 32 vorbei geführt. Der zur Beschichtung verwendeten Lack 16a wird wie ein "Vorhang" auf die vorbei geführte Papierlage 4 extrudiert, so daß in Abhängigkeit des extrudierten Lackvolumens pro Zeiteinheit und der Geschwindigkeit der Papierlage 4 eine mehr oder weniger Dicke Lackschicht 16 auf der Papierlage 4 ausgebildet wird.

In Bezug auf die Figuren 4 bis 8 versteht es sich, daß die gezeigten Verfahren sowohl mit dem Lack 16a zur Ausbildung der Lackschicht 16 als auch mit einer Tränkmasse 12 (nicht gezeigt) zum partiellen Tränken der Papierlage 4 bzw. zur Ausbildung der Tränkmassenschicht 14 durchführbar sind.

### Bezugszeichenliste

- 2: Dekorprodukt
- 4: Papierlage
- 6: Papierfaser
- 8: Dekorseite
- 10: Haftseite
- 12: Duroplast-Vorprodukt/Duromer-Vorprodukt
- 12: Thermoplast/Plastomer
- 14: Tränkmassenschicht
- 16: Lackschicht
- 16a: Lack
- 18: Rand der Papierlage
- 20: Endlackschicht
- 22: Auftragwalze
- 24: Kammerrakel
- 26: Haschurenwalze
- 28: Gegenwalze
- 30: Meyerbarrakel
- 32: Extrusionseinrichtung

## Patentansprüche

1. Verfahren zum Herstellen eines Dekorprodukts, umfassend die Schritte:
- Bereitstellen einer Papierlage (4) mit
-- einer Haftseite (10) und mit
-- einer Dekorseite (8);
- zumindest bereichsweises Beschichten der Dekorseite (8) der Papierlage (4) mit einer Lackschicht (16);
- partielles Tränken der Papierlage (4) über die Haftseite (10) mit einem Duroplast-Vorprodukt (12) und/oder einem Thermoplast (12),
wobei ein Porenraum der Papierlage (4) nicht vollständig durch das Duroplast-Vorprodukt (12) und/oder den Thermoplast (12) gefüllt wird und die lokale Sättigung des Porenraumes der Papierlage (4) mit dem Duroplast-Vorprodukt (12) und/oder dem Thermoplast (12) von einem Maximalwert an der Haftseite (10) zu einem Sättigungswert etwa gleich null an der Dekorseite (8) sinkt und
wobei die Dekorseite (8) zumindest bereichsweise frei von dem Duroplast-Vorprodukt (12) und/oder dem Thermoplast (12) bleibt; und
- Auftragen einer Endlackschicht (20) auf die Lackschicht (16).

2. Verfahren nach Anspruch 1, wobei mindestens 50 Prozent der Fläche der Haftseite (10) der Papierlage (4) frei von der Lackschicht (16) bleibt und/oder mindestens 50 Prozent der Dekorseite (8) frei von dem Duroplast-Vorprodukt (12) und/oder dem Thermoplasten bleibt.

3. Verfahren nach Anspruch 1 oder 2, wobei eine vorimprägnierte Papierlage (4) bereitgestellt wird.

4. Verfahren nach einem der vorigen Ansprüche, weiter umfassend den Schritt:
- Bedrucken der Dekorseite (8) mit einem Dekormuster vor dem Lackieren der Dekorseite (8) und/oder vor dem partiellen Tränken der Papierlage.

5. Verfahren nach einem der vorigen Ansprüche, wobei die Lackschicht (16) bis zum Auftragen der Endlackschicht (20) chemisch und/oder mechanisch unverändert bleibt.

6. Verfahren nach einem der vorherigen Ansprüche, wobei das Duroplast-Vorprodukt (12) ein Melamin-Harz ist.

7. Dekorprodukt, umfassend:
- eine Papierlage (4) mit
-- einer Haftseite (10), wobei die Papierlage (4) über die Haftseite mit einem Duroplast-Vorprodukt (12) und/oder einem Thermoplast (12) partiell getränkt ist, wobei ein Porenraum der Papierlage (4) nicht vollständig durch das Duroplast-Vorprodukt (12) und/oder den Thermoplast (12) gefüllt ist und die lokale Sättigung des Porenraumes der Papierlage (4) mit dem Duroplast-Vorprodukt (12) und/oder dem Thermoplast (12) von einem Maximalwert an der Haftseite (10) zu einem Sättigungswert etwa gleich null an der Dekorseite (8) sinkt,
und mit
-- einer Dekorseite (8), wobei die Dekorseite zumindest bereichsweise frei von dem Duroplast-Vorprodukt (12) und/oder dem Thermoplast (12) ist;
- eine Lackschicht (16), die an der Dekorseite (8) der Papierlage (4) angeordnet ist und die Dekorseite (8) zumindest bereichsweise bedeckt, wobei auf der Lackschicht (16) eine Endlackschicht (20) aufgetragen ist.

8. Dekorprodukt (2) nach Anspruch 7, wobei mindestens 50 Prozent der Fläche der Haftseite (10) der Papierlage (4) frei von der Lackschicht (16) sind und/oder mindestens 50 Prozent der Dekorseite (8) frei von von dem Duroplast-Vorprodukt (12) und/oder dem Thermoplasten (12) sind.

9. Dekorprodukt (2) nach Anspruch 7 oder 8, wobei die Papierlage (4) eine vorimprägnierte Papierlage (4) ist.

10. Dekorprodukt (2) nach einem der Ansprüche 7 bis 9, wobei das Duroplast-Vorprodukt (12) ein Melamin-Harz ist.

11. Dekorprodukt (2) nach einem der Ansprüche 7 bis 10, wobei die Lackschicht (16) und/oder die Endlackschicht (20) zwischen etwa 85 Prozent und etwa 95 Prozent der Dekorseite der Papierlage bedeckt.

12. Verwendung eines Dekorprodukts (2) zum Herstellen einer dekorierten Trägerfläche, wobei
- eine Trägerfläche bereitgestellt wird,
- ein Dekorprodukt (2) gemäß einem der Ansprüche 7 bis 11 mit der Haftseite (10) mittels des Duroplast-Vorprodukts (12) und/oder mittels des Thermoplasten (12) unter Einwirkung von Wärme und/oder Druck an der Trägerfläche befestigt wird.

## Claims

1. A method for producing a decorative product comprising the steps of:
- providing a paper layer (4) with
- an adhesive side (10) and with
- a decorative side (8);
- at least in areas coating the decorative side (8) of the paper layer (4) with a lacquer coat (16);
- partially soaking the paper layer (4) with a thermosetting plastic intermediate product (12) and/or a thermoplastic material (12) via the adhesive side (10), wherein a pore space of the paper layer (4) is not completely filled by the thermosetting plastic intermediate product (12) and/or the thermoplastic material (12) and the local saturation of the pore space of the paper layer (4) with the thermosetting plastic intermediate product (12) and/or the thermoplastic material (12) decreases from a maximum value on the adhesive side (10) to a saturation value which is approximately zero on the decorative side (8) and wherein the decorative side (8) remains free from the thermosetting plastic intermediate product (12) and/or the thermoplastic material (12) at least in areas; and
- applying a top lacquer coat (20) on the lacquer coat (16).

2. The method according to claim 1, wherein at least 50 percent of the surface of the adhesive side (10) of the paper layer (4) remains free from the lacquer coat (16) and/or at least 50 percent of the decorative side (8) remains free from the thermosetting plastic intermediate product (12) and/or the thermoplastic material.

3. The method according to claim 1 or 2, wherein a pre-impregnated paper layer (4) is provided.

4. The method according to one of the preceding claims, further comprising the step of:
- imprinting the decorative side (8) with a decorative pattern before lacquering the decorative side (8) and/or before partially soaking the paper layer.

5. The method according to one of the preceding claims, wherein the lacquer coat (16) remains chemically and/or mechanically unchanged until application of the top lacquer coat (20).

6. The method according to one of the preceding claims, wherein the thermosetting plastic intermediate product (12) is a melamine resin.

7. A decorative product, comprising:
- a paper layer (4) with
- an adhesive side (10), wherein the paper layer (4) is partially soaked with a thermosetting plastic intermediate product (12) and/or thermoplastic material (12) via the adhesive side, wherein a pore space of the paper layer (4) is not completely filled by the thermosetting plastic intermediate product (12) and/or thermoplastic material (12) and the local saturation of the pore space of the paper layer (4) with the thermosetting plastic intermediate product (12) and/or the thermoplastic material (12) decreases from a maximum value on the adhesive side (10) to a saturation value which is approximately zero on the decorative side (8), and with
- a decorative side (8), wherein the decorative side is free from the thermosetting plastic intermediate product (12) and/or the thermoplastic material (12) at least in areas;
- a lacquer coat (16), which is arranged on the decorative side (8) of the paper layer (4) and which covers the decorative side (8) at least in areas, wherein a top lacquer coat (20) is applied on the lacquer coat (16).

8. The decorative product (2) according to claim 7, wherein at least 50 percent of the surface of the adhesive side (10) of the paper layer (4) is free from the lacquer coat (16) and/or at least 50 percent of the decorative side (8) is free from the thermosetting plastic intermediate product (12) and/or the thermoplastic material (12).

9. The decorative product (2) according to claim 7 or 8, wherein the paper layer (4) is a pre-impregnated paper layer (4).

10. The decorative product (2) according to one of claims 7 to 9, wherein the thermosetting plastic intermediate product (12) is a melamine resin.

11. The decorative product (2) according to one of claims 7 to 10, wherein the lacquer coat (16) and/or the top lacquer coat (20) covers between approximately 85 and approximately 95 percent of the decorative side of the paper layer.

12. A use of a decorative product (2) for producing a decorated support surface, wherein
- a support surface is provided,
- a decorative product (2) according to one of claims 7 to 11 with the adhesive side (10) is fastened to the support surface by means of the thermosetting plastic intermediate product (12) and/or by means of the thermoplastic material (12) by applying heat and/or pressure.

## Revendications

1. Procédé de fabrication d'un produit de décoration **caractérisé en ce qu'**il comprend les étapes suivantes :
- mise à disposition d'une couche de papier (4) avec
- un côté de fixation (10) et
- un côté décoré (8);
- application, au moins par zones, d'une couche de vernis (16) sur le côté décoré (8) de la couche de papier (4);
- imprégnation partielle de la couche de papier (4) sur le côté de fixation (10) avec un produit primaire en résine thermodurcissable (12) et/ou une matière thermoplastique (12), un volume de pore de la couche de papier (4) n'étant pas complètement rempli par le produit primaire en résine thermodurcissable (12) et/ou la matière thermoplastique (12) et la saturation locale du volume de pore de la couche de papier (4) avec le produit primaire en résine thermodurcissable (12) et/ou avec la matière thermoplastique (12) passe d'une valeur maximale du côté de fixation (10) à une valeur proche de zéro du côté décoré (8) et
le côté décoré (8) restant libre, au moins par zones, du produit primaire en résine thermodurcissable (12) et/ou de la matière thermoplastique (12) ; et
- application d'une couche de vernis de finition (20) sur la couche de vernis (16).

2. Procédé selon la revendication 1, dans lequel au moins 50 pour cent de la surface du côté de fixation (10) de la couche de papier (4) reste exempte de la couche de vernis (16) et/ou au moins 50 pour cent de la surface du côté décoré (8) reste exempte du produit primaire en résine thermodurcissable (12) et/ou de la matière thermoplastique.

3. Procédé selon la revendication 1 ou 2, dans lequel une couche de papier (4) préimprégnée est mise à disposition.

4. Procédé selon l'une des revendications précédentes qui comprend en plus l'étape suivante :
- impression sur le côté décoré (8) d'un motif de décoration avant d'y appliquer le vernis et/ou avant l'imprégnation partielle de la couche de papier.

5. Procédé selon l'une des revendications précédentes, dans lequel les caractéristiques chimiques et/ou mécaniques de la couche de vernis (16) restent inchangées jusqu'à l'application de la couche de vernis de finition (20).

6. Procédé selon l'une des revendications précédentes, dans lequel le produit primaire en résine thermodurcissable (12) est une résine de mélamine.

7. Produit de décoration comprenant :
- une couche de papier (4) avec
- un côté de fixation (10), la couche de papier (4) étant partiellement imprégnée sur le côté de fixation d'un produit primaire en résine thermodurcissable (12) et/ou de matière thermoplastique (12), un volume de pore de la couche de papier (4) n'étant pas complètement rempli par le produit primaire en résine thermodurcissable (12) et/ou la matière thermoplastique (12) et la saturation locale du volume de pore de la couche de papier (4) avec le produit primaire en résine thermodurcissable (12) et/ou avec la matière thermoplastique (12) passe d'une valeur maximale du côté de fixation (10) à une valeur proche de zéro du côté décoré (8),
et avec
- un côté décoré (8), qui est exempt, au moins par zones, du produit primaire en résine thermodurcissable (12) et/ou de la matière thermoplastique (12);
- une couche de vernis (16) qui est agencée sur le côté décoré (8) de la couche de papier (4) et qui recouvre le côté décoré (8) au moins par zones, la couche de vernis (16) étant recouverte d'une couche de vernis de finition (20).

8. Produit de décoration (2) selon la revendication 7, dont au moins 50 pour cent de la surface du côté de fixation (10) de la couche de papier (4) sont exempts de la couche de vernis (16) et/ou au moins 50 pour cent du côté décoré (8) sont exempts du produit primaire en résine thermodurcissable (12) et/ou de la matière thermoplastique (12).

9. Produit de décoration (2) selon la revendication 7 ou 8, dont la couche de papier (4) est une couche de papier préimprégnée (4).

10. Produit de décoration (2) selon l'une des revendications 7 à 9, dont le produit primaire en résine thermodurcissable (12) est une résine de mélamine.

11. Produit de décoration (2) selon l'une des revendications 7 à 10, dont la couche de vernis (16) et/ou la couche de vernis de finition (20) recouvre d'environ 85 à environ 95 pour cent du côté décoré de la couche de papier.

12. Utilisation d'un produit de décoration (2) pour fabriquer une surface de support décorée, comportant
- la mise à disposition d'une surface de support,
- la fixation d'un produit de décoration (2) selon l'une des revendications 7 à 11 avec le côté de fixation (10) sur la surface de support, moyennant le produit primaire en résine thermodurcissables (12) et/ou la matière thermoplastique (12) sous l'influence de chaleur et/ou de pression.
